# EUROPEAN PATENT APPLICATION

(11) **EP 4 741 449 A1**
(43) Date of publication of application: **13.05.2026**
(21) Application number: 25215019.8
(22) Date of filing: 11.11.2025
(51) Int. Cl.: C08J 5/18, B32B 27/08, B32B 27/32, C08J 7/04, C08J 7/043, C08J 7/046, C09D 175/06, C09D 175/16, C09D 175/08, C08G 18/62, C08G 18/73

(54) **DECORATIVE SHEET AND METHOD FOR PRODUCING SAME**

(30) Priority: 12.11.2024 JP 2024197364
(71) Applicant: Eiwakako Co., Ltd., Misato-shi, Saitama 341-0044 (JP)
(72) Inventor: Takemura, Makoto, Saitama 341-0044 (JP)
(74) Representative: Eisenführ Speiser

(57) **Abstract**

An object of the present invention is to provide a decorative sheet having all of processability in three-dimensional molding, adhesiveness to a substrate, and scratch resistance of a surface.

The decorative sheet is a three-dimensionally moldable decorative sheet having at least a resin base material layer and a surface protective layer, in which the surface protective layer consists of a cured product of a resin composition including an ultraviolet-curable resin (A) and a thermosetting resin (B) at a mass ratio of 30:70 to 60:40, the ultraviolet-curable resin (A) is one or more urethane (meth)acrylates selected from a polyester-based urethane (meth)acrylate, a polyether-based urethane (meth)acrylate, and a polycarbonate-based urethane (meth)acrylate, each of which has 2 to 3 functional groups and yields a cured product of a pencil hardness of HB to 4B, and the thermosetting resin (B) consists of an acrylic polyol-based resin and a polyisocyanate compound that is a curing agent.

## Description

### BACKGROUND OF THE INVENTION

### Field of the Invention

The present invention relates to a decorative sheet and a method for producing the same.

Priority is claimed on Japanese Patent Application No. 2024-197364 filed November 12, 2024.

### Description of Related Art

For example, as an interior or exterior member used in building materials, it is widely practiced to attach a decorative sheet to a surface of a three-dimensionally shaped substrate to impart designability.

As the decorative sheet, for example, a decorative sheet having a base material, a colored ink layer, a primer layer, and a surface protective layer in this order, in which the base material is a polyester-based film that is particularly biaxially stretched and has a thickness of 20 µm or more and 95 µm or less, and the surface protective layer consists of a cured product of a resin composition including an ionizing radiation-curable resin and a thermosetting resin at a mass ratio of 95:5 to 50:50, has been proposed (Japanese Patent No. 5949053).

Since the biaxially stretched polyester-based film is aligned and crystallized in the biaxial direction, the film does not have elongation at around 100°C, making it impossible to perform three-dimensional molding.

### SUMMARY OF THE INVENTION

However, in the related art such as Japanese Patent No. 5949053, it is difficult to obtain a decorative sheet having all of processability in three-dimensional molding, adhesiveness to a substrate, and scratch resistance of a surface.

An object of the present invention is to provide a decorative sheet having all of processability in three-dimensional molding, adhesiveness to a substrate, and scratch resistance of a surface; and a method for producing the same.

The present invention includes the following configurations.
[1]: A three-dimensionally moldable decorative sheet having at least:
   a resin base material layer; and
   a surface protective layer, in which the surface protective layer consists of a cured product of a resin composition including an ultraviolet-curable resin (A) and a thermosetting resin (B) at a mass ratio of 30:70 to 60:40, the ultraviolet-curable resin (A) is one or more urethane (meth)acrylates selected from a polyester-based urethane (meth)acrylate, a polyether-based urethane (meth)acrylate, and a polycarbonate-based urethane (meth)acrylate, each of which has 2 to 3 functional groups and yields a cured product of a pencil hardness of HB to 4B, and the thermosetting resin (B) consists of an acrylic polyol-based resin and a polyisocyanate compound that is a curing agent.
[2]: The decorative sheet according to [1],
   in which the resin base material layer consists of a polyester-based sheet or a polypropylene-based sheet having a tensile elongation of 200% or more at 90°C and a load of 4.0 to 9.0 N/cm at the tensile elongation in a range of 50% to 200%, and the resin base material layer has a thickness of 120 to 300 µm.
[3]: The decorative sheet according to [2],
   in which the polyester-based sheet having a tensile elongation of 200% or more at 90°C is an amorphous polyester-based sheet.
[4]: The decorative sheet according to [2],
   in which the polypropylene-based sheet having a tensile elongation of 200% or more at 90°C is an amorphous polypropylene-based sheet in which an olefin-based elastomer and a polyethylene resin are blended.
[5]: The decorative sheet according to any one of [1] to [4],
   in which the resin base material layer is a three-layer structure including two kinds of components or a three-layer structure including three kinds of components, in which a recycled polyethylene terephthalate resin or a recycled polypropylene resin is used in an interlayer of the resin base material layer.
[6]: A method for producing a three-dimensionally moldable decorative sheet having at least a resin base material layer and a surface protective layer, the method including: applying the following resin composition including an ultraviolet-curable resin (A) and a thermosetting resin (B), each described below, at a mass ratio of 30:70 to 60:40 onto a surface of a long sheet that forms the resin base material layer; and
   curing the ultraviolet-curable resin (A) by ultraviolet irradiation, followed by winding into a roll, and then completely curing the thermosetting resin (B) by aging at 35°C to 55°C to form a surface protective layer,
   in which the ultraviolet-curable resin (A) is one or more urethane (meth)acrylates selected from a polyester-based urethane (meth)acrylate, a polyether-based urethane (meth)acrylate, and a polycarbonate-based urethane (meth)acrylate, each of which has 2 to 3 functional groups, and yields a cured product of a pencil hardness of HB to 4B, and the thermosetting resin (B) consists of an acrylic polyol-based resin and a polyisocyanate compound that is a curing agent.
[7]: The method for producing a decorative sheet according to [6],
   in which the resin base material layer consists of a polyester-based sheet or a polypropylene-based sheet having a tensile elongation of 200% or more at 90°C and a load of 4.0 to 9.0 N/cm at the tensile elongation in a range of 50% to 200%, and the resin base material layer has a thickness of 120 to 250 µm.
[8]: The method for producing a decorative sheet according to [7],
   in which the polyester-based sheet having a tensile elongation of 200% or more at 90°C is an amorphous polyester-based sheet.
[9]: The method for producing a decorative sheet according to [7],
   in which the polypropylene-based sheet having a tensile elongation of 200% or more at 90°C is an amorphous polypropylene-based sheet in which an olefin-based elastomer and a polyethylene resin are blended.
[10]: The method for producing a decorative sheet according to any one of [6] to [9],
   in which the resin base material layer is a three-layer structure including two kinds of components or a three-layer structure including three kinds of components, in which a recycled polyethylene terephthalate resin or a recycled polypropylene resin is used in an interlayer of the resin base material layer.

According to the present invention, there are provided a decorative sheet having all of processability in three-dimensional molding, adhesiveness to a substrate, and scratch resistance of a surface; and a method for producing the same. In particular, a decorative sheet using a recycled resin, which has the characteristics above, can also be provided.

### BRIEF DESCRIPTION OF THE DRAWINGS

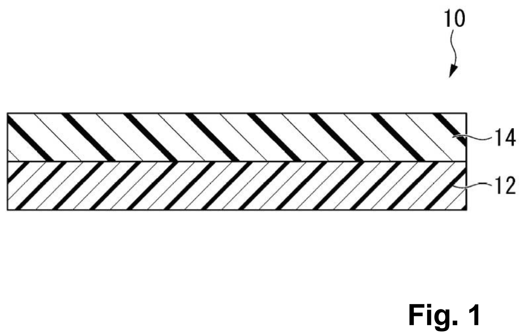

FIG. 1 is a cross-sectional view schematically showing a decorative sheet according to an example of an embodiment.

### DETAILED DESCRIPTION OF THE INVENTION

The following terms in the present specification have the following meanings.

The term "(meth)acryl" means acryl or methacryl.

The term "(meth)acryloyl group" means an acryloyl group or a methacryloyl group.

The term "(meth)acrylate" means acrylate or methacrylate.

The term "to" indicating a numerical range means that the numerical values before and after it are included as lower and upper limit values.

Hereinafter, the decorative sheet of the present invention will be described with reference to the drawings. Furthermore, the dimensions and the like in the drawings that are exemplary examples in the following description are merely examples, and the present invention is not limited thereto. As long as the gist of the present invention is not changed, the present invention can be embodied by appropriately modifying the dimensions and the like.

### [Decorative Sheet]

The decorative sheet according to the embodiment is a three-dimensionally moldable decorative sheet having at least a resin base material layer and a surface protective layer, in which the surface protective layer consists of a cured product of a resin composition including an ultraviolet-curable resin (A) and a thermosetting resin (B) at a mass ratio of 30:70 to 60:40.

FIG. 1 is a cross-sectional view schematically showing a decorative sheet according to an example of an embodiment.

As shown in FIG. 1, a decorative sheet 10 according to an example of the embodiment includes a resin base material layer 12 and a surface protective layer 14 provided on the resin base material layer 12.

Furthermore, the decorative sheet according to the embodiment may have a layer other than the resin base material layer and the surface protective layer on one or more of the side of the resin base material layer 12 opposite to the surface protective layer 14, a space between the resin base material layer 12 and the surface protective layer 14, and the side of the surface protective layer 14 opposite to the resin base material layer 12.

### (Resin Base Material Layer)

A resin sheet can be used as the resin base material layer.

The resin sheet may be a monolayer or a multilayer. In a case of the multilayer, for example, a two-layer structure including two kinds of components and a three-layer structure including two kinds of components can be used. In a case of the multilayer, it is possible to effectively utilize resources by forming a layer other than the surface layer as a resin layer containing a recycled resin as a main component.

As the resin sheet, a polyester-based sheet or a polypropylene-based sheet is preferable.

The polyester resin used for the polyester-based sheet may be a homopolymer or a copolymer.

Examples of the polyester resin include polyethylene terephthalate, polybutylene terephthalate, and polyethylene naphthalate. As the polyester resin constituting the polyester-based sheet, one kind may be used alone, or two or more kinds may be used in combination.

In order to improve the processability, a modified polyester (PETG) obtained by copolymerizing ethylene glycol and cyclohexanedimethanol with terephthalic acid may be blended in the polyester-based sheet. In addition, the polyester-based sheet may be processed as an amorphous sheet to improve the processability.

In order to improve the processability, at least one of an olefin-based elastomer and a polyethylene-based resin may be blended in the polypropylene-based sheet.

It is preferable that the resin sheet has a tensile elongation of 200% or more in a case where a tensile test is performed using a sample having a thickness of 200 µm and a width of 10 mm under conditions of a temperature of 90°C and a tensile speed of 500 mm/min. In addition, in the tensile test, the load measured at a tensile elongation in a range of 50% to 200% is preferably 4.0 to 9.0 N/cm, and more preferably 4.5 to 8.5 N/cm. In a case where the load is within the range, the processability of three-dimensional molding such as vacuum molding, air pressure molding, and membrane press molding is more excellent. In addition, in a case where the load is equal to or less than the upper limit value, an increase in the processing pressure of the three-dimensional molding is likely to be suppressed. In a case where the load is equal to or more than the lower limit value, excessive elongation of the decorative sheet and generation of wrinkles during molding are likely to be suppressed.

As the polyester-based sheet having a tensile elongation of 200% or more at 90°C, an amorphous polyester-based sheet is preferable. The amorphous polyester-based sheet is obtained by rapidly cooling a sheet extruded from a T-die in extrusion molding with two cooling rolls at 20°C or lower to significantly reduce the degree of crystallinity.

As the polypropylene-based sheet having a tensile elongation of 200% or more at 90°C, an amorphous polypropylene-based sheet, in which an olefin-based elastomer and a polyethylene resin are blended, is preferable.

Examples of the olefin-based elastomer include an ethylene/α-olefin random copolymer, a propylene/α-olefin random copolymer, and a butene-1/α-olefin random copolymer, each of which has a density of 0.91 g/cm³ or less, and preferably 0.90 g/cm³ or less. Examples of the α-olefin include 1-hexene and 1-octene.

As a commercially available product of these olefin-based elastomers, for example, those manufactured by Mitsui Chemicals, Inc., Nippon Polyethylene Corporation, and Dow Chemical Company can be used.

It is preferable that a polyethylene terephthalate-based sheet using a recycled polyethylene terephthalate resin (hereinafter referred to as "recycled PET") is used as the resin base material layer.

In general, recycled PET shows coloration, incorporation of foreign substances, and the like. Therefore, in a case where recycled PET is used, it is preferable to use a three-layer colored sheet in which the recycled PET is used as an interlayer in the resin base material layer and an unused polyethylene terephthalate (PET) resin is used in both the outer layers. In this manner, it is possible to effectively utilize the recycled PET while ensuring the stability of coloration.

As the resin base material layer using recycled PET, a layer consisting of a sheet having a three-layer structure including two kinds of components or a three-layer structure including three kinds of components, in which recycled PET is used in the interlayer, is preferable.

It is preferable that the polyester-based sheet using recycled PET is an amorphous polyester-based sheet. For example, an amorphous polyester-based sheet in which recycled PET is used as an interlayer can be obtained by using recycled PET as a material of the interlayer, extruding a sheet having a three-layer structure including two kinds of components or a three-layer structure including three kinds of components from a T-die capable of molding the sheet, and rapidly cooling the sheet by sandwiching the sheet between two cooling rolls at 20°C or lower to significantly reduce the degree of crystallinity.

It is also preferable that a polypropylene-based sheet using a recycled polypropylene resin (hereinafter referred to as "recycled PP") is used in the resin base material layer.

In general, recycled PP also has coloration, incorporation of foreign substances, and the like. Therefore, in a case where recycled PP is used, it is preferable to use a three-layer colored sheet in which the recycled PP is used as an interlayer in the resin base material layer and an unused polypropylene (PP) resin is used in both the outer layers. In this manner, it is possible to effectively utilize the recycled PP while ensuring the stability of coloration.

As the resin base material layer using recycled PP, a layer consisting of a sheet having a three-layer structure including two kinds of components or a three-layer structure including three kinds of components, in which recycled PP is used in the interlayer, is preferable.

It is preferable that the polypropylene-based sheet using recycled PP is an amorphous polypropylene-based sheet. For example, an amorphous polypropylene-based sheet, in which recycled PP is used as an interlayer, can be obtained by blending an olefin-based elastomer and a polyethylene resin with the recycled PP used in the interlayer to significantly reduce the degree of crystallinity.

The thickness of the resin base material layer is preferably 150 to 300 µm, and more preferably 180 to 250 µm. In a case where the thickness of the resin base material layer is equal to or more than the lower limit value, the decorative sheet is likely to be elongated and three-dimensional molding is facilitated. In a case where the thickness of the resin base material layer is equal to or less than the upper limit value, the formability of the decorative sheet is excellent.

The thickness of the resin base material layer is the average of thicknesses measured at any three points in the resin base material.

A colorant may be blended in the resin sheet constituting the resin base material layer 12. In addition, additives such as a filler, a flame retardant, an antioxidant, a lubricant, an ultraviolet absorber, and a light stabilizer may be blended as necessary in the resin sheet. These additives may be used alone or a combination of two or more kinds thereof may be used.

A design may be provided on a surface of the resin base material layer 12 on the side where the surface protective layer 14 is provided. The design can be applied by gravure printing, inkjet printing, or the like. The design is not particularly limited, and examples thereof include a wood grain pattern, a stone grain pattern, a sand grain pattern, a tile grain pattern, a brickwork pattern, a cloth pattern, a leather striped pattern, a geometric figure, and an abstract pattern.

In order to improve the adhesiveness between the resin base material layer 12 and the surface protective layer 14, the surface of the resin base material layer 12 on the side where the surface protective layer 14 is provided may be subjected to a surface treatment by an oxidation method or an easy adhesion coating treatment.

Examples of the surface treatment by the oxidation method include a corona discharge treatment and an ozone-ultraviolet treatment.

Examples of the resin used for the easy adhesion coating treatment include a polyester resin, an acrylic resin, and a urethane resin. These resins may be used alone or a combination of two or more kinds thereof may be used.

### (Surface Protective Layer)

The surface protective layer 14 is a layer consisting of a cured product of a resin composition including an ultraviolet-curable resin (A) and a thermosetting resin (B) at a mass ratio of 30:70 to 60:40.

The ultraviolet-curable resin (A) is a resin that is crosslinked and cured by irradiation with ultraviolet rays. The ultraviolet-curable resin (A) is one or more urethane (meth)acrylates selected from a polyester-based urethane (meth)acrylate, a polyether-based urethane (meth)acrylate, and a polycarbonate-based urethane (meth)acrylate, each having 2 to 3 functional groups. In addition, the pencil hardness of a cured product of the ultraviolet-curable resin (A) is HB to 4B.

Examples of the functional group contained in the ultraviolet-curable resin (A) include a (meth)acryloyl group. The ultraviolet-curable resin (A) has two or three (meth)acryloyl groups.

The ultraviolet-curable resin (A) may be an oligomer or may be a prepolymer.

The ultraviolet-curable resin (A) can be obtained, for example, by esterifying a polyurethane oligomer obtained by a reaction of a polyether polyol, a polyester polyol, or a polycarbonate polyol with a polyisocyanate, with a (meth)acrylic acid.

The ultraviolet-curable resin (A) may be used alone or a combination of two or more kinds thereof may be used.

The pencil hardness of the cured product of the ultraviolet-curable resin (A) is HB to 4B, and preferably HB to 2B. In a case where the pencil hardness of the cured product of the ultraviolet-curable resin (A) is within the range, the processability of three-dimensional molding such as vacuum molding and membrane press molding is excellent.

Furthermore, the pencil hardness is measured in accordance with JIS K 5600-5-4: 1999.

In a case of curing the ultraviolet-curable resin (A) with ultraviolet rays, a photopolymerization initiator may be used. The photopolymerization initiator can be appropriately selected from those used in the related art, and preferred examples thereof include a benzoin-based photopolymerization initiator, an acetophenone-based photopolymerization initiator, a phenyl ketone-based photopolymerization initiator, a benzophenone-based photopolymerization initiator, and an anthraquinone-based photopolymerization initiator.

The amount of the photopolymerization initiator used is preferably 0.1 to 5 parts by mass with respect to 100 parts by mass of the ultraviolet-curable resin (A).

The thermosetting resin (B) is a resin that is crosslinked and cured by heating. The thermosetting resin (B) preferably consists of an acrylic polyol-based resin and a curing agent.

Examples of the acrylic polyol-based resin include an acrylic polyol having two or more hydroxy groups in the molecule. The acrylic polyol-based resin is obtained, for example, by copolymerizing a (meth)acrylic acid ester and a hydroxy group-containing (meth)acrylic acid ester.

Examples of the (meth)acrylic acid ester used in the acrylic polyol-based resin include methyl (meth)acrylate, ethyl (meth)acrylate, butyl (meth)acrylate, 2-ethylhexyl (meth)acrylate, and octyl (meth)acrylate. These (meth)acrylic acid esters may be used alone or a combination of two or more kinds thereof may be used.

Examples of the hydroxy group-containing (meth)acrylic acid ester used in the acrylic polyol-based resin include 2-hydroxyethyl (meth)acrylate, 2-hydroxybutyl (meth)acrylate, and 2-hydroxy-3-phenoxypropyl (meth)acrylate. These hydroxy group-containing (meth)acrylic acid esters may be used alone or a combination of two or more kinds thereof may be used.

The weight-average molecular weight of the acrylic polyol-based resin is preferably in a range of 20,000 to 200,000, more preferably in a range of 25,000 to 150,000, and still more preferably in a range of 30,000 to 100,000. In a case where the weight-average molecular weight of the acrylic polyol-based resin is equal to or more than the lower limit value, the drying properties are excellent. In a case where the weight-average molecular weight of the acrylic polyol-based resin is equal to or lower than the upper limit value, sufficient processability is likely to be obtained.

The weight-average molecular weight of the acrylic polyol-based resin is a value in terms of standard polystyrene measured by gel permeation chromatography (GPC).

The glass transition temperature (Tg) of the acrylic polyol-based resin is preferably 65°C to 110°C, and more preferably 75°C to 105°C. In a case where the Tg of the acrylic polyol-based resin is equal to or higher than the lower limit value, the drying properties and the heat resistance are excellent. In a case where the Tg of the acrylic polyol-based resin is equal to or lower than the upper limit value, the drying properties are excellent and sufficient hardness is likely to be maintained.

As the Tg of the acrylic polyol-based resin, a value of an intermediate point between an exo glass transition start temperature and an exo glass transition end temperature, which are measured using a differential scanning calorimeter, is used.

The hydroxyl value of the acrylic polyol-based resin is preferably 5 to 30 mgKOH/g, and more preferably 10 to 25 mgKOH/g. In a case where the hydroxyl value of the acrylic polyol-based resin is equal to or more than the lower limit value, the drying properties are excellent. In a case where the hydroxyl value of the acrylic polyol-based resin is equal to or less than the upper limit value, the occurrence of blocking is likely to be suppressed.

The hydroxyl value of the acrylic polyol-based resin is a value obtained by expressing the amount of potassium hydroxide in milligrams corresponding to the number of hydroxyl groups per gram of a sample, and is a value measured based on a potentiometric titration method specified in JIS K 0070: 1992.

As the curing agent used in the thermosetting resin (B), a polyisocyanate compound is preferable.

The polyisocyanate compound is a compound having two or more isocyanate groups in the molecule. Examples of the polyisocyanate compound include aliphatic polyisocyanates such as hexamethylene diisocyanate, isophorone diisocyanate, and dicyclohexylmethane diisocyanate; and polyisocyanates having an aromatic ring, such as tolylene diisocyanate, xylylene diisocyanate, and diphenylmethane diisocyanate. These polyisocyanate compounds may be used alone or a combination of two or more kinds thereof may be used.

The mass ratio of the ultraviolet-curable resin (A) to the thermosetting resin (B) is 30:70 to 60:40, preferably 30:70 to 50:50, and more preferably 35:65 to 48:52. In a case where the ratio of the thermosetting resin (B) is equal to or more than the lower limit, the processability of three-dimensional molding such as vacuum molding and membrane press molding is excellent. In a case where the ratio of the thermosetting resin (B) is equal to or less than the upper limit, the scratch resistance is improved.

The resin composition forming the surface protective layer may be blended with other resins that are other than the ultraviolet-curable resin (A) and the thermosetting resin (B).

The other resins are not particularly limited and examples thereof include a polyester polyol resin. These other resins may be used alone or a combination of two or more kinds thereof may be used.

Various additives may be blended in the surface protective layer depending on required physical properties.

Examples of the additive include an ultraviolet absorber, a light stabilizer, an abrasion resistance improver, an antistatic agent, a leveling agent, a coupling agent, a filler, and a solvent.

The ultraviolet absorber may be any of an inorganic ultraviolet absorber and an organic ultraviolet absorber.

As the inorganic ultraviolet absorber, titanium oxide, cerium oxide, or zinc oxide, which has an average particle diameter of approximately 5 to 120 nm, can be preferably used. Preferred examples of the organic ultraviolet absorber include a benzotriazole-based ultraviolet absorber, a triazine-based ultraviolet absorber, and a benzophenone-based ultraviolet absorber. As the ultraviolet absorber, a triazine-based ultraviolet absorber, which has high ultraviolet absorbing ability and is less likely to deteriorate even with high energy such as ultraviolet rays, is preferable.

Examples of the triazine-based ultraviolet absorber include products "TINUVIN 479", "TINUVIN 400", "TINUVIN 405", and "TINUVIN 460" (all manufactured by BASF SE).

In a case where the surface protective layer contains an ultraviolet absorber, the content of the ultraviolet absorber is preferably 0.5 to 10 parts by mass, and more preferably 1 to 5 parts by mass with respect to 100 parts by mass of the resin component forming the surface protective layer.

In a case where the surface protective layer contains a light stabilizer, the content of the light stabilizer is preferably 0.1 to 10 parts by mass, and more preferably 0.5 to 5 parts by mass with respect to 100 parts by mass of the resin component forming the surface protective layer.

The thickness of the surface protective layer is preferably 5 to 20 µm, and more preferably 6 to 12 µm. In a case where the thickness of the surface protective layer is equal to or more than the lower limit value, the scratch resistance is excellent. In a case where the thickness of the surface protective layer is equal to or less than the upper limit value, the hardness is likely to be maintained and a decrease in scratch resistance is also likely to be suppressed.

The thickness of the surface protective layer is the average of thicknesses measured at any three points in the surface protective layer.

The use of the decorative sheet according to the embodiment is not particularly limited, and examples thereof include a surface material of a door or furniture. The decorative sheet according to the embodiment is suitable for imparting designability by being attached to a surface of a substrate having a three-dimensional shape by three-dimensional molding such as vacuum molding and membrane press molding.

### [Method for Producing Decorative Sheet]

The above-described decorative sheet can be produced by, for example, a method described below.

The method for producing a decorative sheet according to the embodiment is a method for producing a three-dimensionally moldable decorative sheet having at least the above-described resin base material layer and surface protective layer.

In the method for producing a decorative sheet according to an example of the embodiment, the following resin composition including an ultraviolet-curable resin (A) and a thermosetting resin (B) at a mass ratio of 30:70 to 60:40 is applied onto a surface of a long sheet that forms the resin base material layer, the ultraviolet-curable resin (A) is cured by ultraviolet irradiation and wound into a roll, and then the thermosetting resin (B) is completely cured by aging at 35°C to 55°C to form a surface protective layer.

As the long sheet, a long form of the above-described resin sheet can be used.

In a case of forming a surface protective layer consisting of the resin composition including the ultraviolet-curable resin (A) and the thermosetting resin (B), for example, the ultraviolet-curable resin (A) and the thermosetting resin (B) are mixed at a predetermined ratio, a solvent is added thereto to adjust the viscosity, and various additives are added thereto as necessary to prepare a coating agent. The viscosity of the coating agent is not particularly limited as long as the viscosity is a viscosity at which the application can be performed.

As the solvent, ethyl acetate, butyl acetate, or methyl ethyl ketone are preferable, but the present invention is not limited thereto.

The solid resin content of the coating agent is preferably 30% to 70% by mass, and more preferably 35% to 55% by mass. In a case where the proportion of the solid resin content is equal to or more than the lower limit value, the surface protective layer can be easily formed by applying the resin base material layer. In a case where the proportion of the solid resin content is equal to or more than the lower limit value, the amount of the solvent used can be reduced and the drying time can be further shortened.

For example, a surface protective layer can be formed by applying a coating agent onto the resin base material layer so that the thickness after curing is 5 to 20 µm to form an uncured resin composition layer, irradiating the uncured resin composition layer with ultraviolet rays to cure the ultraviolet-curable resin (A), and curing the thermosetting resin (B) by heating.

As a method of applying the coating agent, for example, a known method such as gravure coating, bar coating, and reverse coating can be employed, and the gravure coating is preferable.

The wavelength of the ultraviolet rays used for curing the ultraviolet-curable resin (A) is preferably 254 to 436 nm, and more preferably 300 to 365 nm. As the light source, for example, a high-pressure mercury lamp can be used.

The integrated amount of ultraviolet irradiation during the curing of the ultraviolet-curable resin (A) is preferably 100 to 500 mJ/cm², and more preferably 300 to 400 mJ/cm².

It is preferable that the aging at 35°C to 55°C during the curing of the thermosetting resin (B) is performed in a constant temperature chamber. After curing the ultraviolet-curable resin (A) by irradiating the coating agent on the long sheet with ultraviolet light, it is preferable to allow the roll wound around a paper core to stand upright for aging. By placing the roll in an upright position in which the paper core is oriented vertically, the constant-temperature chamber can be used efficiently, and deformation of the decorative sheet due to heating temperature can be suppressed.

The heating temperature during the curing of the thermosetting resin (B) is preferably 35°C to 55°C, and more preferably 40°C to 53°C. In a case where the heating temperature is higher than 55°C, the long sheet forming the resin base material layer is softened, and wrinkles are formed by shrinkage due to residual stress during extrusion molding, which is not preferable. In addition, in a case where the heating temperature is lower than 35°C, curing takes time, which is not preferable.

The heating time during the curing of the thermosetting resin (B) varies depending on the heating temperature, but is preferably 2 days to 10 days, and more preferably 5 days to 7 days.

The thermosetting resin (B) can be aged, for example, at 40°C for 5 days or at 50°C for 3 days as the curing conditions of the thermosetting resin (B).

Furthermore, the method for producing a decorative sheet according to the embodiment is not limited to the above-described method.

For example, with regard to a timing of curing the ultraviolet-curable resin (A) by ultraviolet irradiation and a timing of curing the thermosetting resin (B) by heating, it is preferable that the ultraviolet-curable resin (A) is cured and then the thermosetting resin (B) is cured. However, the thermosetting resin (B) may be cured and then the ultraviolet-curable resin (A) may be cured. Alternatively, the thermosetting resin (B) and the ultraviolet-curable resin (A) may be cured at the same time.

As described above, in the present invention, it is possible to obtain a decorative sheet having all of processability in three-dimensional molding, adhesiveness to a substrate, and scratch resistance of a surface by forming the surface protective layer on the resin base material layer by a cured product of a resin composition including the specific ultraviolet-curable resin (A) and the specific thermosetting resin (B) at a specific ratio.

### [Examples]

Hereinafter, the present invention will be described in detail with reference to Examples, but the present invention is not limited to the following description.

### [Materials]

Materials used in the present Examples are shown below.

### (Ultraviolet-Curable Resin (A))

A-1: Polyester-based urethane (meth)acrylate, number of functional groups: 3, pencil hardness of cured product: 2B
A-2: Polyether-based urethane (meth)acrylate, number of functional groups: 2, pencil hardness of cured product: B
A-3: Polycarbonate-based urethane (meth)acrylate, number of functional groups: 2, pencil hardness of cured product: 3B

### (Other Ultraviolet-Curable Resins (X))

X-1: Polyester-based urethane (meth)acrylate, number of functional groups: 7: pencil hardness of cured product: 2H
X-2: Polyester-based urethane (meth)acrylate, number of functional groups: 6, pencil hardness of cured product: 3H
X-3: Polycaprolactam-based urethane (meth)acrylate, number of functional groups: 2, pencil hardness: B

### (Curable Resin (B))

B-1: Mixture of acrylic polyol (Tg: 100°C, hydroxyl value: 15 mgKOH/g, solid resin content: 38% by mass, weight-average molecular weight: 55,000) and curing agent (hexamethylene diisocyanate) at mass ratio of 5:1
B-2: Mixture of acrylic polyol (Tg: 93°C, hydroxyl value: 10 mgKOH/g, solid resin content: 38% by mass, weight-average molecular weight: 75,000) and curing agent (hexamethylene diisocyanate) at mass ratio of 6:1

### (Other Components)

Photopolymerization initiator: "Omnirad 184" manufactured by IGM Resins B. V
Ultraviolet absorber: "TINUVIN 400" manufactured by BASF SE

### [Production Example 1]

A composition X-1 was prepared by blending a black pigment into a resin mixture including 60% by mass of recycled PP, 5% by mass of an unused PP resin, 15% by mass of an olefin-based elastomer (ethylene/α-olefin random copolymer, "TAFMER" manufactured by Mitsui Chemicals, Inc., density: 0.89 g/cm³), and 20% by mass of a polyethylene resin. In addition, a composition Y-1 was prepared by blending a black pigment into a resin mixture including 70% by mass of an unused PP resin, 10% by mass of an olefin-based elastomer (ethylene/α-olefin random copolymer, "TAFMER" manufactured by Mitsui Chemicals, Inc., density: 0.89 g/cm³), and 20% by mass of a polyethylene resin. The composition X-1 was put into one of the two extruders and the composition Y-1 was put into the other extruder, in which the composition X-1 was used in the interlayer and the composition Y-1 was used in both the outer layers, and the compositions were extruded from a T-die having a three-layer structure including two kinds of components (outer layer:interlayer:outer layer (thickness ratio) = 1:6:1). Thus, a three-layer structure sheet having a reduced degree of crystallinity with a total thickness of 200 µm was wound to obtain a sheet A wound in a length of 600 m.

In a case where a sample having a thickness of 200 µm, a length of 100 mm, and a width of 10 mm was cut out from the sheet A in the length direction and the width direction of the sheet A, and subjected to a tensile test under conditions of a temperature of 90°C and a tensile speed of 500 mm/min, the load at which a tensile elongation was measured in a range of 50% to 200% in both directions was set to 5.0 to 7.5 N/cm.

### [Production Example 2]

A composition X-2 was prepared by blending a black pigment into a resin mixture including 75% by mass of recycled PET and 15% by mass of a methyl methacrylate/butadiene/styrene (MBS) copolymer as an impact-resistant reinforced resin. In addition, a composition Y-2 was prepared by blending a black pigment into a resin mixture including 85% by mass of an unused PET resin and 15% by mass of an MBS copolymer as an impact-resistant reinforced resin. The composition X-2 was put into one of two extruders and the composition Y-2 was put into the other extruder, in which the composition X-2 was used in the interlayer and the composition Y-2 was used in both the outer layers, the compositions were extruded from a T-die having a three-layer structure including two kinds of components (outer layer:interlayer:outer layer (thickness ratio) = 1:12:1), and the extruded sheet was cooled by sandwiching the sheet between two cooling rolls at 15°C and 20°C. Thus, the three-layer structure sheet having a total thickness of 200 µm and a reduced degree of crystallinity was wound to obtain a sheet B wound in a length of 600 m.

In a case where a sample having a thickness of 200 µm, a length of 100 mm, and a width of 10 mm was cut out from the sheet B in the length direction and the width direction of the sheet B, and subjected to a tensile test under conditions of a temperature of 90°C and a tensile speed of 500 mm/min. The load at which a tensile elongation was measured in a range of 50% to 200% in both directions was set to 4.5 to 7.0 N/cm.

### [Examples 1 to 7]

To obtain the composition shown in Table 1, a resin composition obtained by mixing the ultraviolet-curable resin (A) and the thermosetting resin (B) was adjusted in viscosity by addition of ethyl acetate, and a photopolymerization initiator and an ultraviolet absorber were added thereto to prepare a coating agent.

As a resin sheet constituting the resin base material layer, the sheet A wound in a length of 600 m, obtained in Production Example 1, was used. After subjecting the resin sheet to a surface corona treatment, the coating agent was applied onto the treated surface of the resin sheet using a gravure reverse coater so that the thickness after curing was 7 to 8 µm. After the coating, the solvent was removed by heating at 70°C for about 1 minute to dry the coating film, then the coating film was irradiated with ultraviolet rays having a wavelength of 300 nm × 365 nm using a high-pressure mercury lamp to cure the ultraviolet-curable resin (A), and the sheet A provided with the surface protective layer was wound. Thereafter, the wound sheet A was aged at 50°C for 3 days and the thermosetting resin (B) was completely cured to form a surface protective layer, thereby obtaining a decorative sheet.

### [Comparative Examples 1 to 6]

Decorative sheets were produced by the same method as in Examples 1 to 7, except that the composition of the resin composition was changed as shown in Table 1.

### [Evaluation Method]

The following evaluations of the adhesiveness, the processability, and the scratch resistance were performed for the decorative sheet obtained in each example.

### (Adhesiveness)

A 2 mm × 2 mm grid-like scratch was made on a surface of the surface protective layer of the decorative sheet with a cutter knife to form a 100-square grid. A pressure-sensitive adhesive tape was attached to the grid and the pressure-sensitive adhesive tape was peeled off at an angle of 45 degrees. This was repeated three times. Thereafter, the proportion of the peeled pieces peeled off by the pressure-sensitive adhesive tape on the 100 squares of the grid was calculated, and the adhesiveness was evaluated according to the following standard.

### <Evaluation Standard>

A: The proportion of the peeled pieces was 0%.
B: The proportion of the peeled pieces was 5% to 10%.
C: The proportion of the peeled pieces was 11% or more.

### (Processability)

The decorative sheet was interposed in a vacuum molding chamber and heated, and the temperature of the decorative sheet was raised to 100°C by holding the decorative sheet for about 2 minutes. Then, the decorative sheet was placed on a mold having a groove with a depth of 3 cm and a width of 4 cm from above, and the decorative sheet was formed by reducing the pressure. The obtained molded product was taken out, and the presence or absence of cracking and whitening was visually observed and evaluated according to the following standard.

### <Evaluation Standard>

A: There is no cracking or whitening.
B: There is slight whitening.
C: There is cracking or whitening.
D: There is significant cracking or whitening.

### (Scratch Resistance)

Steel wool was brought into contact with the surface of the surface protective layer of the decorative sheet under a load of 1 kg, and reciprocated 10 times. Then, the surface of the surface protective layer was visually observed and evaluated according to the following standard.

### <Evaluation Standard>

A: There is substantially no change in appearance.
B: There is a slight scratch or change in appearance.
C: There is a significant scratch or change in appearance.

The evaluation results of Examples 1 to 7 and Comparative Examples 1 to 6 are shown in Table 1.

**[Table 1]**

| | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|
| Ultraviolet-curable resin (A) [parts by mass] | A-1 | 45 | 55 | 35 | | | 50 | | | | 70 | 20 | | |
| | A-2 | | | | 40 | | | 45 | | | | | | |
| | A-3 | | | | | 45 | | | | | | | | |
| Other ultraviolet-curable resins (X) [parts by mass] | X-1 | | | | | | | | 50 | | | | | |
| | X-2 | | | | | | | | | 50 | | | | |
| | X-3 | | | | | | | | | | | | 50 | |
| Thermosetting resin (B) [parts by mass] | B-1 | 55 | 45 | 65 | 60 | 55 | | | 50 | 50 | 30 | 80 | 50 | 100 |
| | B-2 | | | | | | 50 | 55 | | | | | | |
| Photopolymerization initiator [parts by mass] | | 4 | 5 | 3 | 4 | 4 | 5 | 4 | 5 | 5 | 5 | 3 | 5 | - |
| Ultraviolet absorber [parts by mass] | | 2 | 2 | 2 | 2 | 2 | 2 | 2 | 2 | 2 | 2 | 2 | 2 | 2 |
| Adhesiveness | | B | B | B | B | B | B | B | B | B | B | B | B | B |
| Processability | | A | B | A | A | B | B | A | C | C | D | A | A | A |
| Scratch resistance | | B | A | B | B | B | B | B | A | A | A | C | C | C |

As shown in Table 1, the decorative sheets of Examples 1 to 6, in which the surface protective layer was formed of the resin composition including the ultraviolet-curable resin (A) and the thermosetting resin (B) at the ratio specified in the present invention had excellent adhesiveness, processability, and scratch resistance.

On the other hand, the decorative sheets of Comparative Examples 1, 2, 5, and 6, in which the ultraviolet-curable resin (A) was not used, and the decorative sheets of Comparative Examples 3 and 4, in which the ratio of the ultraviolet-curable resin (A) to the thermosetting resin (B) was inappropriate, did not have the adhesiveness, processability, and scratch resistance.

### [Example 8]

A resin composition obtained by mixing 40 parts by mass of an ultraviolet-curable resin (A-1) and 60 parts by mass of a thermosetting resin (B-1) was adjusted in viscosity by addition of ethyl acetate, and 2 parts by mass of a photopolymerization initiator and 2 parts by mass of an ultraviolet absorber were further added thereto to prepare a coating agent.

As a resin sheet constituting the resin base material layer, the sheet B obtained in Production Example 2 was used.

The coating agent was applied onto the treated surface of the resin sheet with a gravure reverse coater so that the thickness after curing was 10 µm. After the coating, the coating film was allowed to pass through a heating zone at 70°C for about 1 minute to remove the solvent, dried, and then irradiated with ultraviolet rays at a wavelength of 300 nm to cure the ultraviolet-curable resin (A-1). Thereafter, aging was performed at 50°C for 3 days, and the thermosetting resin (B-1) was completely cured to form a surface protective layer, thereby obtaining a decorative sheet.

The evaluation of the adhesiveness of the obtained decorative sheet was "A" and the evaluation of the scratch resistance was "B".

In addition, in a case where a decorative sheet was adhered to a wooden door that had been subjected to three-dimensional unevenness processing by router processing with a membrane press molding machine set to about 100°C, and subjected to lamination processing, making it possible to perform the processing very cleanly with no cracks.

While preferred embodiments of the invention have been described and illustrated above, it should be understood that these are exemplary examples of the invention and are not to be considered as limiting. Additions, omissions, substitutions, and other modifications can be made without departing from the scope of the invention. Accordingly, the invention is not to be considered as being limited by the foregoing description and is only limited by the scope of the appended Claims.

### EXPLANATION OF REFERENCES

10: decorative sheet
12: resin base material layer
14: surface protective layer

## Claims

1. A three-dimensionally moldable decorative sheet comprising at least:
a resin base material layer; and
a surface protective layer,
wherein the surface protective layer consists of a cured product of a resin composition including an ultraviolet-curable resin (A) and a thermosetting resin (B) at a mass ratio of 30:70 to 60:40, the ultraviolet-curable resin (A) is one or more urethane (meth)acrylates selected from a polyester-based urethane (meth)acrylate, a polyether-based urethane (meth)acrylate, and a polycarbonate-based urethane (meth)acrylate, each of which has 2 to 3 functional groups and yields a cured product of a pencil hardness of HB to 4B, and the thermosetting resin (B) consists of an acrylic polyol-based resin and a polyisocyanate compound that is a curing agent.

2. The decorative sheet according to Claim 1,
wherein the resin base material layer consists of a polyester-based sheet or a polypropylene-based sheet having a tensile elongation of 200% or more at 90°C and a load of 4.0 to 9.0 N/cm at the tensile elongation in a range of 50% to 200%, and
the resin base material layer has a thickness of 120 to 300 µm.

3. The decorative sheet according to Claim 2,
wherein the polyester-based sheet having a tensile elongation of 200% or more at 90°C is an amorphous polyester-based sheet.

4. The decorative sheet according to Claim 2,
wherein the polypropylene-based sheet having a tensile elongation of 200% or more at 90°C is an amorphous polypropylene-based sheet in which an olefin-based elastomer and a polyethylene resin are blended.

5. The decorative sheet according to any one of Claims 1 to 4,
wherein the resin base material layer is a three-layer structure including two kinds of components or a three-layer structure including three kinds of components, in which a recycled polyethylene terephthalate resin or a recycled polypropylene resin is used in an interlayer of the resin base material layer.

6. A method for producing a three-dimensionally moldable decorative sheet having at least a resin base material layer and a surface protective layer, the method comprising:
applying the following resin composition including an ultraviolet-curable resin (A) and a thermosetting resin (B), each described below, at a mass ratio of 30:70 to 60:40 onto a surface of a long sheet that forms the resin base material layer; and
curing the ultraviolet-curable resin (A) by ultraviolet irradiation, followed by winding into a roll, and then completely curing the thermosetting resin (B) by aging at 35°C to 55°C to form a surface protective layer,
wherein the ultraviolet-curable resin (A) is one or more urethane (meth)acrylates selected from a polyester-based urethane (meth)acrylate, a polyether-based urethane (meth)acrylate, and a polycarbonate-based urethane (meth)acrylate, each of which has 2 to 3 functional groups, and yields a cured product of a pencil hardness of HB to 4B, and the thermosetting resin (B) consists of an acrylic polyol-based resin and a polyisocyanate compound that is a curing agent.

7. The method for producing a decorative sheet according to Claim 6,
wherein the resin base material layer consists of a polyester-based sheet or a polypropylene-based sheet having a tensile elongation of 200% or more at 90°C and a load of 4.0 to 9.0 N/cm at the tensile elongation in a range of 50% to 200%, and
the resin base material layer has a thickness of 120 to 250 µm.

8. The method for producing a decorative sheet according to Claim 7,
wherein the polyester-based sheet having a tensile elongation of 200% or more at 90°C is an amorphous polyester-based sheet.

9. The method for producing a decorative sheet according to Claim 7,
wherein the polypropylene-based sheet having a tensile elongation of 200% or more at 90°C is an amorphous polypropylene-based sheet in which an olefin-based elastomer and a polyethylene resin are blended.

10. The method for producing a decorative sheet according to any one of Claims 6 to 9,
wherein the resin base material layer is a three-layer structure including two kinds of components or a three-layer structure including three kinds of components, in which a recycled polyethylene terephthalate resin or a recycled polypropylene resin is used in an interlayer of the resin base material layer.
